# EUROPÄISCHE PATENTSCHRIFT

(11) **EP 2 512 844 B1**
(45) Veröffentlichungstag und Bekanntmachung des Hinweises auf die Patenterteilung: **27.11.2013**
(21) Anmeldenummer: 10798957.6
(22) Anmeldetag: 09.12.2010
(51) Int. Cl.: B60G 7/00, B60G 17/015, B62D 17/00

(54) **VORRICHTUNG ZUM VERSTELLEN VON STURZ UND/ODER SPUR DER RÄDER VON KRAFTFAHRZEUGEN**
DEVICE FOR ADJUSTING THE CAMBER AND/OR TOE OF MOTOR VEHICLE WHEELS
DISPOSITIF DE RÉGLAGE DU CARROSSAGE ET/OU DE L'ALIGNEMENT DES ROUES DE VÉHICULES AUTOMOBILES

(30) Priorität: 16.12.2009 DE 102009058489
(43) Veröffentlichungstag der Anmeldung: 24.10.2012
(73) Patentinhaber: Audi AG, 85045 Ingolstadt (DE)
(72) Erfinder: MEITINGER, Karl-Heinz, 81667 München (DE); MICHEL, Wilfried, 93339 Riedenburg (DE); KOSSIRA, Christoph, 85053 Ingolstadt (DE); MÜLLER, Hugo, 86701 Rohrenfels-Ballersdorf (DE); SCHMID, Wolfgang, 85354 Freising (DE)
(86) Internationale Anmeldenummer: PCT/EP2010/007477
(87) Internationale Veröffentlichungsnummer: WO 2011/082756

(56) Entgegenhaltungen:
- WO-A1-98/16418
- WO-A1-2005/047030
- DE-A1-102004 049 296
- DE-A1-102008 011 367

## Beschreibung

Die Erfindung betrifft eine Vorrichtung zum Verstellen von Sturz und/oder Spur der Räder von Radaufhängungen, insbesondere für Kraftfahrzeuge, gemäß dem Oberbegriff des Patentanspruches 1.

Eine gattungsgemäße Vorrichtung ist in der DE 10 2008 011 367 A1 beschrieben, bei der der Sturz und/oder die Spur der Räder im Fahrbetrieb über in den Radträger integrierte Drehteile verstellbar ist. Der Radträger ist dabei in ein das Rad aufnehmendes Trägerteil und ein an Radaufhängungselementen angelenktes Führungsteil unterteilt, die durch Verdrehung eines oder beider Drehteile über Elektromotoren und durch Stirnzahnräder gebildete Stelltriebe das Trägerteil relativ zum Führungsteil verschwenken. Die Verstellung wird dabei dadurch bewirkt, dass die rotationssymmetrischen Drehteile eine gemeinsame Drehachse und dazu geneigte Schrägflächen oder Drehlagerungen aufweisen, die bei Verdrehung der Drehteile gleichsinnig oder gegensinnig ein entsprechendes Verschwenken des Trägerteiles um bis zu 5° Spur- und/oder Sturzwinkel ermöglichen.

Aufgabe der Erfindung ist es, die Vorrichtung der gattungsgemäßen Art derart weiterzubilden, dass eine fertigungstechnisch günstige, robuste Konstruktion der Drehlagerungen der Drehteile einschließlich der im Radträger angeordneten Radlagerung erzielbar ist, die zudem eine vereinfachte Montage der betreffenden Bauteile ermöglicht.

Diese Aufgabe wird erfindungsgemäß mit den Merkmalen des Patentanspruches 1 gelöst. Vorteilhafte Weiterbildungen der Erfindung beschreiben die Unteransprüche.

Gemäß dem kennzeichnenden Teil des Patentanspruches 1 weist das vom Trägerteil getragene Radlager, in dem das Fahrzeugrad drehbar gelagert ist, ein radial äußeres Lagergehäuse auf. Das Lagergehäuse wird mittels des aus den Drehteilen gebildeten Lagerverbunds in eine Steckverbindung mit dem Trägerteil gepresst. Auf diese Weise ergibt sich eine montagetechnisch einfache Fixierung des Radlagers am Trägerteil, ohne dass zusätzliche Schraubverbindungen zur Festlegung des Radlagers erforderlich sind.

Bevorzugt sind die Drehteile über Kegelrollenlager am Trägerteil und am Führungsteil drehbar gelagert. Dabei kann das Lagergehäuse des Radlagers mit den Kegelrollenlagern einen von einer gemeinsamen Seite montier- und vorspannbaren Lagerverbund bilden. Wie oben bereits erwähnt, ergeben die beschriebenen Maßnahmen eine montagegünstige Integration der Drehlagerungen der Drehteile mit dem Radlagergehäuse derart, dass Verschraubungen zwischen dem Lagergehäuse und dem Trägerteil entfallen können. Die Steckverbindung kann zum Beispiel teleskopisch ausgeführt sein, mit einem axialen Anschlag zum Trägerteil.

Des Weiteren wird vorgeschlagen, dass die eine gemeinsame Drehachse aufweisenden Kegelrollenlager der Drehteile in einer X-förmigen Lageranordnung zueinander geneigt sind. Die eine Lagerinnenbahn der Lageranordnung ist dabei an dem Lagergehäuse des Radlagers und die andere Lagerinnenbahn der Lageranordnung an einem in das Führungsteil eingesetzten Einstellring angeordnet. Der Einstellring kann mittel- oder unmittelbar über eine Gewindeverbindung im Führungsteil axial verstellbar sein. Dies ermöglicht mit gleichzeitiger, axialer Vorspannung des Radlagergehäuses eine spielfreie, einfach einstellbare Anordnung der Kegelrollenlager in dem so geschaffenen Lagerverbund.

Fertigungstechnisch besonders günstig kann das Lagergehäuse des Radlagers und/oder der Einstellring aus Wälzlagerstahl hergestellt sein und unmittelbar die Lagerinnenbahnen der Kegelrollenlager aufweisen. Ferner können in das Radlagergehäuse auch die Außenwälzbahnen des Radlagers unmittelbar eingearbeitet sein.

Bevorzugt kann des Weiteren der Einstellring in einem Nabenabschnitt des Führungsteiles verschiebbar geführt und mittels eines Gewinderinges axial zustellbar sein. Daraus resultiert eine zuverlässige Abstützung und Entkopplung der radial wirkenden Kräfte und Momente an dem Kegelrollenlager und der axialen Vorspannkräfte.

In besonders vorteilhafter Weiterbildung der Erfindung kann sich die Steckverbindung des Lagergehäuses mit dem Trägerteil durch einen sich zu den Kegelrollenlagern hin erweiternden Innenkonus des Trägerteiles und einem korrespondierenden Außenkonus am Lagergehäuse zusammensetzen. Neben einer absolut spielfreien Aufnahme des Lagergehäuses im Trägerteil ergibt sich eine Montagevereinfachung dadurch, dass sich das Lagergehäuse selbsttätig im Trägerteil zentriert. Insbesondere kann dabei der Innenkonus mit einer großen Abstützbasis in einem Nabenabschnitt des Trägerteiles ausgebildet sein.

Des Weiteren kann besonders zweckmäßig die zu der gemeinsamen Drehachse der Drehteile geneigte Drehachse durch ein weiteres Kegelrollenlager zwischen den beiden Drehteilen definiert sein, dessen Lagerinnenbahn und/oder Lageraußenbahn unmittelbar an den Drehteilen ausgeführt ist.

Wenn das Rad der Radaufhängung bei einer angetriebenen Achse über eine zentrische Gelenkwelle angetrieben ist, so kann in Weiterführung der erfindungsgemäßen Konstruktion deren Gelenkglocke über eine Steckverbindung und eine Zentralschraube mit einem Nabenabschnitt eines das Rad tragenden Radflansches fest verbunden sein, wobei der Nabenabschnitt ferner zwei geteilte Innenringe des Radlagers und eine Spannhülse trägt.

Schließlich können zur Schaffung einer gewichtsgünstigen Konstruktion die die Lagerelemente aufnehmenden Bauteile aus Stahl und die übrigen, weniger beanspruchten Bauteile wie insbesondere das Führungsteil und das Trägerteil des Radträgers aus Leichtmetall hergestellt sein.

Ein Ausführungsbeispiel der Erfindung ist im Folgenden mit weiteren Einzelheiten näher erläutert. Die schematische Zeichnung zeigt in:
- **Fig. 1**: ein Prinzipbild der Vorrichtung zum Verstellen von Spur- und Sturzwinkel einer Radaufhängung für Kraftfahrzeuge mit einem mehrteiligen Radträger;
- **Fig. 2**: die Vorrichtung gemäß **Fig. 1** mit Darstellung der kardanischen Verbindung zwischen dem Führungsteil und dem Trägerteil des Radträgers;
- **Fig. 3**: die Vorrichtung gemäß den **Fig. 1 und 2** in einer gegenständlichen Ausführung, mit einem ein Rad tragendes Trägerteil, einem an Radführungselementen der Radaufhängung angelenkten Führungsteil und mit zwei über Kegelrollenlager verdrehbaren Drehteilen, die mit dem koaxialen Radlager zu einem Lagerverbund kombiniert sind; und
- **Fig. 4**: die Vorrichtung gemäß **Fig. 3** in einer vergrößerten, nur den Lagerverbund darstellenden Teilansicht.

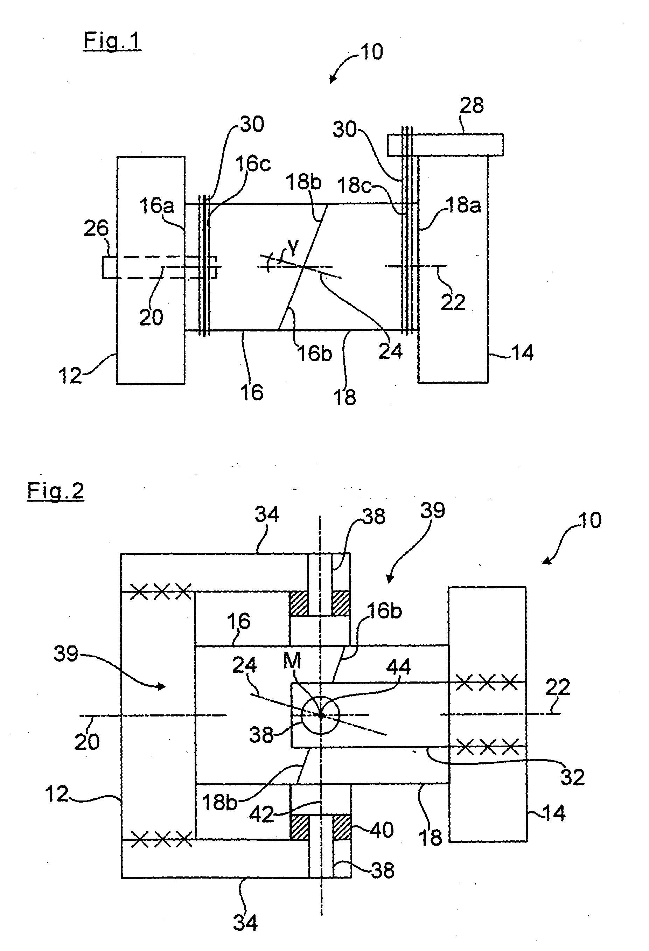

Die **Fig. 1** zeigt zur theoretischen Erläuterung der Erfindung als grobes Prinzipbild ein Radführungselement beziehungsweise einen Radträger 10 einer Radaufhängung für Kraftfahrzeuge, der zur Verstellung des Sturzes und/oder der Spur des Rades im Bereich der Radlagerung wie folgt unterteilt ist:

Der Radträger 10 weist ein Trägerteil 12 auf, in dem das Rad und das Bremselement (Bremsscheibe, Bremstrommel) einer Betriebsbremse des Kraftfahrzeuges drehbar gelagert ist. Es sei bemerkt, dass, soweit nicht beschrieben, die Funktionsteile der Radaufhängung bekannter Bauart sein können.

Ferner weist der Radträger 10 ein Führungsteil 14 auf, das mit der Radaufhängung zusammenwirkt beziehungsweise gegebenenfalls einen Teil der Radaufhängung bildet.

Zwischen dem Trägerteil 12 und dem Führungsteil 14 sind als Stellelemente zwei im Wesentlichen rotationssymmetrische Drehteile 16, 18 vorgesehen, die jeweils über Drehachsen 20, 22 verdrehbar mit dem Trägerteil 12 beziehungsweise dem Führungsteil 14 verbunden sind. Die beiden Drehachsen 20, 22 sind in der **Fig. 1 und 2** koaxial ausgerichtet und verlaufen bevorzugt in der Raddrehachse.

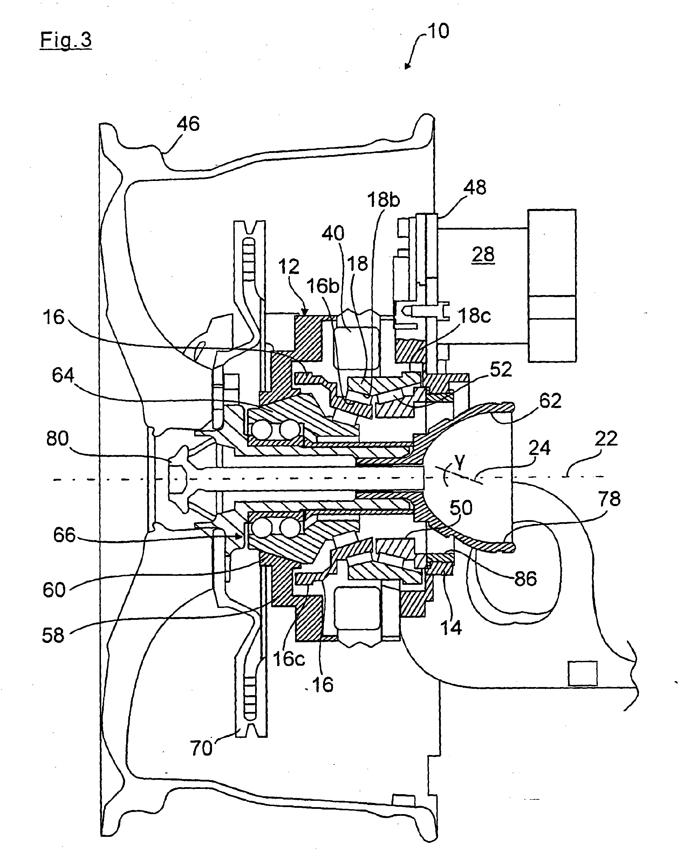

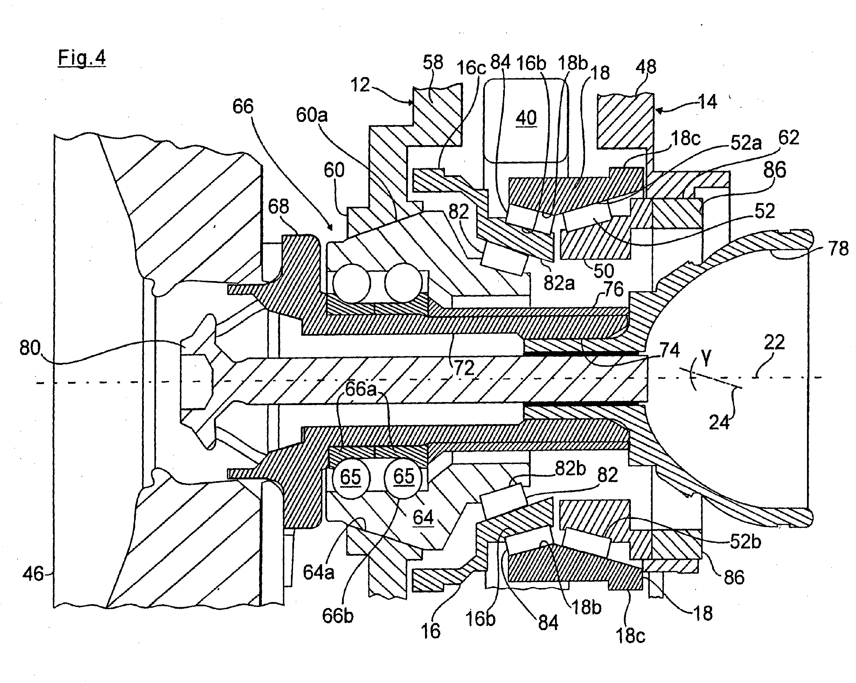

Während die dem Trägerteil 12 und dem Führungsteil 14 unmittelbar benachbarten Anlaufflächen 16a, 18a der Drehteile 16, 18 rotationssymmetrisch ausgeführt sind, liegen die Drehteile 16, 18 über plane oder alternativ gemäß den **Fig. 3** **und** **4** über kegelförmige Schrägflächen 16b, 18b aneinander an und sind über eine Drehachse 24 verdrehbar miteinander verbunden. Die Drehachse 24 ist dabei gemäß der **Fig. 1 und 2** senkrecht zu den Schrägflächen 16b, 18b und in einem definierten Winkel □ zu der Drehachse 22 des Drehteils 18 geneigt ausgerichtet.

Am Trägerteil 12 und am Führungsteil 14 ist jeweils ein elektrischer Stellmotor 26, 28 vorgesehen, die mit den Drehteilen 16, 18 über nur angedeutete Zahnradtriebe 30 trieblich verbunden sind. Mittels der Stellmotoren 26, 28 können die Drehteile 16, 18 gleichsinnig oder gegensinnig in beide Drehrichtungen verdreht werden, wodurch das Trägerteil 12 relativ zum Führungsteil 14 eine Schwenkbewegung oder eine Taumelbewegung ausführend den Spurwinkel und/oder den Sturzwinkel des Rades entsprechend verändert.

Die **Fig. 2** zeigt skizzenhaft eine kardanische Kopplung zwischen dem Führungsteil 14 und dem Trägerteil 12, die als Axialsicherung (Zusammenhalt von Führungsteil und Trägerteil), als Verdrehsicherung und als Momentenabstützung zum Beispiel für am Trägerteil 12 wirkende Bremsmomente und Antriebsmomente dient.

Dazu sind an dem Führungsteil 14 und an dem Trägerteil 12 Gelenkgabein 32, 34 befestigt, die um 90° zueinander versetzt sind und über einheitlich mit 38 bezeichnete Lagerbolzen und einen Stützring 40 miteinander verbunden sind. Das Trägerteil 12 kann somit kardanisch um eine senkrechte Achse 42 und eine zur Zeichnungsebene rechtwinklige Achse 44 verschwenkt werden, wobei der Momentanpol M der kardanischen Verbindung auf dem Schnittpunkt der Drehachse 20 und 22 und der schrägen Drehachse 24 der Drehteile 16, 18 liegt.

Wie bereits erwähnt, sind in den **Fig. 1 und 2** die beiden Drehteile 16, 18 über plane Schrägflächen 16b, 18b in Anlage, um die schräggestellte Drehachse 24 zu bewerkstelligen. In den folgenden **Fig. 3** **und** **4** wird die schräggestellte Drehachse 24 des Drehteils 16 hingegen nicht mit den einander in Anlage befindlichen, planen Schrägflächen 16b, 18b, sondern mit kegelförmigen Schrägflächen 16b, 18b realisiert, die unter Zwischenschaltung eines Kegelrollenlagers 84 einander zugewandt gegenüberliegen.

Die **Fig. 3** **und** **4** zeigen in einem teilweisen Längsschnitt entlang der Drehachse 22 des Rades der Radaufhängung den Radträger 10 in konstruktiver Ausführung, wobei sich die Beschreibung auf die erfindungswesentlichen Merkmale beschränkt. Funktionell gleiche Teile sind mit gleichen Bezugszeichen versehen.

Der Radträger 10 setzt sich wie vorstehend beschrieben aus dem mit Radführungselementen der Radaufhängung wie Lenkern, etc. gelenkig verbundenen Führungsteil 14, dem das Rad (Felge 46) tragenden Trägerteil 12 und den Drehteilen 16, 18 zusammen.

Das Führungsteil 14 weist einen Tragflansch 48 auf, der einen radial innen liegenden Einstellring 50 trägt. Der Einstellring 50 bildet über ein Kegelrollenlager 52 mit dem radial außenliegenden Drehteil 18 eine erste Kegelrollenlagerung, deren Drehachse mit der Drehachse 22 zusammenfällt. Die Außenwälzbahn 52a (**Fig. 4**) des Kegelrollenlagers 52 ist unmittelbar in das Drehteil 18 eingeschliffen, das zu diesem Zweck aus Wälzlagerstahl hergestellt und entsprechend bearbeitet (gehärtet, etc.) ist.

Das Drehteil 18 weist ferner an seinem Außenumfang ein Stirnzahnrad 18c auf, das über ein nicht gezeigtes Zwischenzahnrad mit einem Antriebszahnrad (nicht ersichtlich) des Elektromotors 28 zusammenwirkt, wodurch der in der **Fig. 1** skizzierte Zahnradtrieb 30 gebildet ist. Der Elektromotor 28 ist dazu an der Tragplatte 48 des Führungsteiles 14 befestigt, an der auch das Zwischenzahnrad drehbar gelagert ist. Über den Elektromotor 28 kann das Drehteil 18 in beide Drehrichtungen verstellt werden.

Das Trägerteil 12 weist einen radial ausgerichteten Flanschabschnitt 58 und einen axial verlaufenden Nabenabschnitt 60 auf. Der Nabenabschnitt 60 ist mit einem sich in Richtung Kegelrollenlager 52 erweiternden Innenkonus 60a (**Fig. 4**) versehen.

In den Innenkonus 60a des Nabenabschnittes 60 des Trägerteiles 12 ragt in einfacher Steckverbindung der Außenkonus 64a eines rotationssymmetrischen Lagergehäuses 64 eines zwei Kugelreihen 65 aufweisenden Schrägschulter-Radlagers 66 ein. Das Radlager 66 dient als Drehlager für einen Radflansch 68, an dem wiederum das Rad beziehungsweise die Felge 46 und eine Bremsscheibe 70 über Radschrauben (ohne Bezugszeichen) befestigt sind.

Ferner weist der Radflansch 68 einen sich etwa bis auf Höhe des Kegelrollenlagers 52 erstreckenden Nabenabschnitt 72 auf, der die beiden Lagerinnenringe 66a des Radlagers 66 aufnimmt und der über eine Steckverzahnung 74 und eine Spannhülse 76 fest mit der Gelenkglocke 78 einer nicht weiter dargestellten, das Rad antreibenden Gelenkwelle verbunden ist. Eine an dem Radflansch 68 abgestützte und in die Gelenkglocke 78 eingeschraubte Zentralschraube 80 hält den gesamten Verbund axial zusammen.

In das in den Innenkonus 60a des Trägerteiles 12 einragende, aus einem Wälzlagerstahl hergestellte Lagergehäuse 64 sind die Außenwälzbahnen 66b des Radlagers 66 unmittelbar eingeschliffen.

Ferner weist das Lagergehäuse 64 einen weiteren, mit entgegengesetztem Konuswinkel ausgeführten Außenkonus auf, der unmittelbar die Innenwälzbahn 82b für Kegelrollen eines Kegelrollenlagers 82 für das zweite Drehteil 16 bildet. Das Drehteil 16 ist ebenfalls aus einem Wälzlagerstahl hergestellt und trägt unmittelbar die Außenwälzbahn 82a des Kegelrollenlagers 82. Das Drehteil 16 weist radial außen zudem die bereits erwähnte kegelförmige Schrägfläche 16b auf. Diese wirkt über ein Kegelrollenlager 84 mit der kegelförmigen Schrägfläche 18b des Drehteils 18 zusammen, um die schräggestellte Drehachse 24 des Drehteils 16 zu bewerkstelligen. In den beiden kegelförmigen Schrägflächen 16b, 18b sind jeweils Innen- und Außenwälzbahnen des Kegelrollenlagers 84 eingeschliffen.

Das zwischen dem Einstellring 50 und dem Drehteil 18 angeordnete Kegelrollenlager 52 sowie das zwischen dem Lagergehäuse 64 und dem Drehteil 16 angeordnete Kegelrollenlager 82 sind in einer X-förmigen Lageranordnung (die Kegel der Innenwälzbahnen 52b, 82b sind zueinander sich verjüngend angeordnet) ausgelegt, wobei das Kegelrollenlager 82 rotationssymmetrisch um die schräggestellte Drehachse 24 angeordnet ist. Das Kegelrollenlager 52 ist demgegenüber rotationssymmetrisch um die Drehachse 22 angeordnet. Entsprechend bewirkt eine Verdrehung des Drehteils 16 mittels des Elektromotors 26 und/oder eine Verdrehung des Drehteils 18 mittels des Elektromotors 28 ein Verschwenken des Trägerteiles 12 relativ zum Führungsteil 14.

Der gesamte Lagerverbund mit dem Lagergehäuse 64, den Kegelrollenlagern 52, 82 und 84 kann mittels eines Gewinderinges 86 eingestellt und vorgespannt werden. Der Gewindering 86 ist über eine Gewindeverbindung 62 in den Tragflansch 48 des Führungsteiles 14 eingeschraubt. Die Funktion des Gewinderings 86 besteht darin, den Einstellring 50 des ersten Kegelrollenlagers 52, der in dem Tragflansch 48 verschiebbar geführt ist, nach links vorzuspannen. Dementsprechend wird der gesamte Lagerverbund 52, 82, 84 und mit diesem das Lagergehäuse 64 des Radlagers 66 von der rechten Seite der Zeichnung nach links gegen den Innenkonus 60a des Nabenabschnittes 60 des Trägerteiles 12 vorgespannt. Aufgrund der relativ großen, konischen Abstützbasis kann eine zusätzliche Verschraubung zwischen dem Trägerteil 12 und dem Lagergehäuse 64 des Radlagers 66 entfallen.

Wie anhand der **Fig. 2** bereits erläutert, ist auch im Ausführungsbeispiel der **Fig. 3** **und** **4** eine kardanische Verbindung zwischen dem Führungsteil 14 und dem Trägerteil 12 vorgesehen, die radial außerhalb der Drehteile 16, 18 angeordnet ist. Mittels der kardanischen Verbindung wird die besagte Lagervorspannung axial abgestützt, während die Schwenkbeweglichkeit des Trägerteiles 16 zum Führungsteil 14 bei einer Verdrehung der Drehteile 16, 18 aufrechterhalten bleibt. In der Schnittzeichnung der **Fig. 3** **und** **4** ist der besseren Übersichtlichkeit wegen nur der Stützring 40 dargestellt, während die Gelenkgabeln 32, 34 nicht gezeichnet sind.

Zur Bereitstellung einer gewichtsgünstigen Konstruktion des beschriebenen Radträgers 10 sind die die Kegelrollenlager 52, 82, 84 und das Radlager 66 aufnehmenden Bauteile wie das Lagergehäuse 64, die Drehteile 16, 18, der Einstellring 50, etc. aus Stahl und das weniger beanspruchte Führungsteil 14 und das Trägerteil 12 aus Leichtmetall hergestellt.

**Bezugszeichenliste**

| | | | |
|---|---|---|---|
| 10 | Radträger | 64 | Lagergehäuse |
| 12 | Trägerteil | 64a | Außenkonus |
| 14 | Führungsteil | 65 | Kugelreihen |
| 16, 18 | Drehteile | 66 | Radlager |
| 16a, 18a | Anlaufflächen | 66a | Lagerinnenringe |
| 16b, 18b | Schrägflächen | 66b | Außenwälzbahnen |
| 16c, 18c | Zahnräder | 68 | Radflansch |
| 20, 22, 24 | Drehachsen | 72 | Nabenabschnitt |
| 26, 28 | Elektromotor | 74 | Steckverzahnung |
| 30 | Zahnradtrieb | 76 | Spannhülse |
| 32, 34 | Gelenkgabeln | 78 | Gelenkglocke |
| 38 | Lagerbolzen | 80 | Zentralschraube |
| 40 | Stützring | 82 | Kegelrollenlager |
| 42, 44 | Achse | 82a, 82b | Außen- und Innenwälzbahn |
| 46 | Felge | 84 | Kegelrollenlager |
| 48 | Tragflansch | 86 | Gewindering |
| 50 | Einstellring | | |
| 50a | Innenwälzbahn | | |
| 52 | Kegelrollenlager | | |
| 52a | Außenwälzbahn | | |
| 52b | Innenwälzbahn | | |
| 58 | Flanschabschnitt | | |
| 60 | Nabenabschnitt | | |
| 60a | Innenkonus | | |
| 62 | Gewindeverbindung | | |

## Patentansprüche

1. Vorrichtung zum Verstellen von Sturz und/oder Spur eines Fahrzeugrads, mit einem Radträger (10), an dem das jeweilige Rad drehbar gelagert ist, wobei der Radträger (10) unterteilt ist in ein, über ein Radlager (66) das Rad aufnehmendes Trägerteil (12), ein achsseitiges Führungsteil (14) und in einen dazwischen angeordneten Lagerverbund, bestehend aus zueinander sowie zum Trägerteil (12) und zum Führungsteil (14) verdrehbare Drehteile (16, 18), die mit einander zugewandten Schrägflächen (16b, 18b) zusammenwirken, **dadurch gekennzeichnet, dass** das Radlager (66) ein radial äußeres Lagergehäuse (64) aufweist, das mittels des aus den Drehteilen (16, 18) gebildeten Lagerverbunds in eine Steckverbindung (60a, 64a) mit dem Trägerteil (12) gespannt ist.

2. Vorrichtung nach Anspruch 1, **dadurch gekennzeichnet, dass** das Lagergehäuse (64) des Radlagers (66) zur Ausbildung der Steckverbindung eine erste Kegelmantelfläche (64a) aufweist, wodurch das Lagergehäuse (64) über einen Kegelsitz im Trägerteil (12) fixierbar ist.

3. Vorrichtung nach Anspruch 1 oder 2, **dadurch gekennzeichnet, dass** das Lagergehäuse (64) des Radlagers (66) eine zweite Kegelmantelfläche (82b) aufweist, die mit einem Kegelrollenlager (82) des aus den Drehteilen (16, 18) gebildeten Lagerverbunds in Verbindung ist.

4. Vorrichtung nach Anspruch 1, 2 oder 3, **dadurch gekennzeichnet, dass** die Drehteile (16, 18) über Kegelrollenlager (52, 84) zueinander sowie am Führungsteil (14) drehbar gelagert sind.

5. Vorrichtung nach Anspruch 4, **dadurch gekennzeichnet, dass** das Lagergehäuse (64) zusammen mit den Drehteilen (16, 18) von einer gemeinsamen Seite montier- und einstellbar sind.

6. Vorrichtung nach einem der vorhergehenden Ansprüche, **dadurch gekennzeichnet, dass** der Radträger (10) ein gelenkartiges Fesselungsmittel, insbesondere ein Kardangelenk, zwischen dem Trägerteil (12) und dem Führungsteil (14) aufweist, wobei durch das Fesselungsmittel das Trägerteil (12) und das Führungsteil (14) unter Zwischenschaltung der Drehteile (16, 18) und des Lagergehäuses (64) des Radlagers (66) verspannbar ist.

7. Vorrichtung nach Anspruch 4, 5 oder 6, **dadurch gekennzeichnet, dass** die eine gemeinsame Drehachse (22) aufweisenden Kegelrollenlager (52, 82) der Drehteile (16, 18) in einer X-förmigen Lageranordnung zueinander geneigt sind, und/oder dass die eine Innenwälzbahn (82b) der Lageranordnung an dem Lagergehäuse (64) des Radlagers (66) und die andere Innenwälzbahn (52b) der Lageranordnung an einem in das Führungsteil (14) eingesetzten Einstellring (50) angeordnet sind, wobei der Einstellring (50) mittel- oder unmittelbar über eine Gewindeverbindung (62) im Führungsteil (14) axial verstellbar ist.

8. Vorrichtung nach Anspruch 7, **dadurch gekennzeichnet, dass** das Lagergehäuse (64) des Radlagers (66) und/oder der Einstellring (50) aus Wälzlagerstahl hergestellt sind und unmittelbar die Innenwälzbahnen (82b, 52a) der Kegelrollenlager (52, 82) aufweisen.

9. Vorrichtung nach Anspruch 8, **dadurch gekennzeichnet, dass** die Außenwälzbahnen (66b) des Radlagers (66) unmittelbar in das Radlagergehäuse (64) eingearbeitet sind.

10. Vorrichtung nach einem der Ansprüche 6, 7 oder 8, **dadurch gekennzeichnet, dass** der Einstellring (50) in einem Nabenabschnitt (48) des Führungsteiles (14) verschiebbar geführt und mittels eines Gewinderinges (86) axial zustellbar ist.

11. Vorrichtung nach einem der Ansprüche 2 bis 10, **dadurch gekennzeichnet, dass** die Steckverbindung des Lagergehäuses (64) mit dem Trägerteil (12) durch einen sich zu den Kegelrollenlagern (52, 82) hin erweiternden Innenkonus (60a) des Trägerteiles (12) und einen korrespondierenden Außenkonus (64a) am Lagergehäuse (64) zusammensetzt.

12. Vorrichtung nach Anspruch 11, **dadurch gekennzeichnet, dass** der Innenkonus (60a) mit einer großen Abstützbasis in einem Nabenabschnitt (60) des Trägerteiles (12) ausgebildet ist.

13. Vorrichtung nach einem der vorhergehenden Ansprüche, **dadurch gekennzeichnet, dass** die zu der Drehachse (22) des Drehteiles (18) geneigte Drehachse (24) durch ein Kegelrollenlager (84) zwischen den beiden Drehteilen (16, 18) definiert ist, dessen Lagerinnen- und Lageraußenbahnen unmittelbar an den Drehteilen (16, 18) ausgeführt sind.

14. Vorrichtung nach einem der vorhergehenden Ansprüche, **dadurch gekennzeichnet, dass** das Fahrzeugrad über eine zentrische Gelenkwelle angetrieben ist, deren Gelenkglocke (78) über eine Steckverbindung (74) und eine Zentralschraube (80) mit einem Nabenabschnitt (72) eines das Rad tragenden Radflansches (68) fest verbunden ist, wobei der Nabenabschnitt (72) insbesondere zwei Innenringe (66a) des Radlagers (66) und eine Spannhülse (76) trägt.

15. Vorrichtung nach einem der vorhergehenden Ansprüche, **dadurch gekennzeichnet, dass** die die Kegelrollenlager (52, 82, 84) und das Radlager (66) aufnehmenden Bauteile aus Stahl und das Führungsteil (14) und das Trägerteil (12) aus Leichtmetall hergestellt sind.

## Claims

1. Device for adjusting the camber and/or toe of a motor vehicle wheel, having a wheel carrier (10) on which the wheel in question is rotatably mounted, the wheel carrier (10) being subdivided into a carrier portion (12) which accommodates the wheel via a wheel bearing (66), a guide portion (14) on the axle side and a bearing assemblage mounted therebetween, consisting of rotary parts (16, 18) which are rotatable relative to one another and to the carrier portion (12) and to the guide portion (14) and which cooperate with facing inclined surfaces (16b, 18b), **characterised in that** the wheel bearing (66) comprises a radially outer bearing housing (64) which is braced into a push-fit connection (60a, 64a) with the carrier portion (12) by means of the bearing assemblage formed from the rotary parts (16, 18).

2. Device according to claim 1, **characterised in that** the bearing housing (64) of the wheel bearing (66) comprises a first conical outer surface (64a) for forming the push-fit connection, by means of which the bearing housing (64) can be fixed in the carrier portion (12) via a conical seat.

3. Device according to claim 1 or 2, **characterised in that** the bearing housing (64) of the wheel bearing (66) comprises a second conical outer surface (82b) which is connected to a tapered roller bearing (82) of the bearing assemblage formed from the rotary parts (16, 18).

4. Device according to claim 1, 2 or 3, **characterised in that** the rotary parts (16, 18) are mounted on the guide portion (14) so as to be rotatable relative to one another by means of tapered roller bearings (52, 84).

5. Device according to claim 4, **characterised in that** the bearing housing (64) together with the rotary parts (16, 18) can be mounted and adjusted from a common side.

6. Device according to one of the preceding claims, **characterised in that** the wheel carrier (10) comprises a joint-like securing means, particularly a cardan joint, between the carrier portion (12) and the guide portion (14), the carrier portion (12) and the guide portion (14) being adapted to be braced by the securing means via the interposed rotary parts (16, 18) and the bearing housing (64) of the wheel bearing (66).

7. Device according to claim 4, 5 or 6, **characterised in that** the tapered roller bearings (52, 82) of the rotary parts (16, 18) comprising a common rotation axis (22) are inclined to one another in an X-shaped bearing arrangement, and/or **in that** one inner pitch line (82b) of the bearing arrangement is arranged on the bearing housing (64) of the wheel bearing (66) and the other inner pitch line (52b) of the bearing arrangement is arranged on an adjustment ring (50) inserted into the guide portion (14), the adjustment ring (50) being directly or indirectly axially adjustable in the guide portion (14) by means of a threaded connection (62).

8. Device according to claim 7, **characterised in that** the bearing housing (64) of the wheel bearing (66) and/or the adjustment ring (50) are made from roller bearing steel and comprise the inner pitch lines (82b, 52a) of the tapered roller bearings (52, 82) directly.

9. Device according to claim 8, **characterised in that** the outer pitch lines (66b) of the wheel bearing (66) are incorporated directly in the wheel bearing housing (64).

10. Device according to one of claims 6, 7 or 8, **characterised in that** the adjustment ring (50) is movably guided in a hub section (48) of the guide portion (14) and is axially adjustable by means of a screw-threaded ring (86).

11. Device according to one of claims 2 to 10, **characterised in that** the push-fit connection of the bearing housing (64) with the carrier portion (12) is made up of an inner cone (60a) of the carrier portion (12) widening out towards the tapered roller bearings (52, 82) and a corresponding outer cone (64a) on the bearing housing (64).

12. Device according to claim 11, **characterised in that** the inner cone (60a) is formed with a large support base in a hub section (60) of the carrier portion (12).

13. Device according to one of the preceding claims, **characterised in that** the rotation axis (24) inclined relative to the rotation axis (22) of the rotary part (18) is defined by a conical roller bearing (84) between the two rotary parts (16, 18), the inner and outer bearing tracks of which are formed directly on the rotary parts (16, 18).

14. Device according to one of the preceding claims, **characterised in that** the vehicle wheel is driven by means of a centric drive shaft, the socket (78) of which is fixedly connected, via a push-fit connection (74) and a central screw (80), to a hub section (72) of a wheel flange (68) carrying the wheel, the hub section (72) carrying in particular two inner rings (66a) of the wheel bearing (66) and a clamping sleeve (76).

15. Device according to one of the preceding claims, **characterised in that** the components that accommodate the tapered roller bearings (52, 82, 84) and the wheel bearing (66) are made of steel and the guide portion (14) and the carrier portion (12) are made of light alloy.

## Revendications

1. Dispositif pour régler le carrossage et/ou l'alignement d'une roue de véhicule, avec un support de roue (10), sur lequel la roue considérée est montée de manière à pouvoir tourner, le support de roue (10) étant divisé en une partie porteuse (12) logeant la roue par l'intermédiaire d'un roulement de roue (66), en une partie de guidage (14) du côté de l'axe et en une liaison formant palier agencée entre et constituée de parties tournantes (16, 18) qui peuvent tourner l'une par rapport à l'autre ainsi que par rapport à la partie porteuse (12) et à la partie de guidage (14) et qui coopèrent avec des surfaces obliques (16b, 18b) orientées l'une vers l'autre, **caractérisé en ce que** le roulement de roue (66) comporte un carter de palier (64) qui est contraint dans un assemblage par enfichage (60a, 64a) avec la partie porteuse (12) au moyen de la liaison formant palier formée par les parties tournantes (16, 18).

2. Dispositif selon la revendication 1, **caractérisé en ce que**, pour former l'assemblage par enfichage, le carter de palier (64) du roulement de roue (66) comporte une première surface enveloppante conique (64a) grâce à laquelle le carter de palier (64) peut être fixé dans la partie porteuse (12) par l'intermédiaire d'une embase conique.

3. Dispositif selon la revendication 1 ou 2, **caractérisé en ce que** le carter de palier (64) du roulement de roue (66) comporte une deuxième surface enveloppante conique (82b) qui est en liaison avec un roulement à galets coniques (82) de la liaison formant palier formée par les parties tournantes (16, 18).

4. Dispositif selon la revendication 1, 2 ou 3, **caractérisé en ce que** les parties tournantes (16, 18) sont logées de manière à pouvoir tourner l'une par rapport à l'autre ainsi que par rapport à la partie de guidage (14) par l'intermédiaire de roulements à galets coniques (52, 84).

5. Dispositif selon la revendication 4, **caractérisé en ce que** le carter de palier (64) peut être monté et réglé, conjointement avec les parties tournantes (16, 18), par un côté commun.

6. Dispositif selon l'une des revendications précédentes, **caractérisé en ce que** le support de roue (10) comporte un moyen de blocage articulé, notamment un joint de Cardan, entre la partie porteuse (12) et la partie de guidage (14), la partie porteuse (12) et la partie de guidage (14) pouvant être serrées par le moyen de blocage après avoir intercalé les parties tournantes (16, 18) et le carter de palier (64) du roulement de roue (66).

7. Dispositif selon la revendication 4, 5 ou 6, **caractérisé en ce que** les roulements à galets coniques (52, 82) des parties tournantes (16, 18) ont un axe de rotation commun (22) et sont inclinés l'un par rapport à l'autre dans une disposition de roulements en forme de X et/ou **en ce qu'**un guide intérieur (82b) du dispositif formant palier est agencé sur le carter de palier (64) du roulement de roue (66) et un autre guide intérieur (52b) du dispositif formant palier est agencé sur une bague de réglage (50) placée dans la partie de guidage (14), la bague de réglage (50) pouvant être déplacée de façon axiale dans la partie de guidage (14) directement ou indirectement par l'intermédiaire d'une liaison filetée (62).

8. Dispositif selon la revendication 7, **caractérisé en ce que** le carter de palier (64) du roulement de roue (66) et/ou la bague de réglage (50) sont en acier pour roulement à billes et comportent directement les guides intérieurs (82b, 52a) des roulements à galets coniques (52, 82).

9. Dispositif selon la revendication 8, **caractérisé en ce que** les guides extérieurs (66b) du roulement de roue (66) sont conçus directement dans le carter de palier (64).

10. Dispositif selon l'une des revendications 6, 7 ou 8, **caractérisé en ce que** la bague de réglage (50) est guidée de manière à pouvoir se déplacer dans un segment de moyeu (48) de la partie de guidage (14) et peut être positionnée de façon axiale au moyen d'une bague filetée (86).

11. Dispositif selon l'une des revendications 2 à 10, **caractérisé en ce que** l'assemblage par enfichage du carter de palier (64) avec la partie porteuse (12) se compose d'un cône intérieur (60a), s'étendant en direction des roulements à galets coniques (52, 82), de la partie porteuse (12) et d'un cône extérieur correspondant (64a) sur le carter de palier (64).

12. Dispositif selon la revendication 11, **caractérisé en ce que** le cône intérieur (60a) est conçu avec une grande base d'appui dans un segment de moyeu (60) de la partie porteuse (12).

13. Dispositif selon l'une des revendications précédentes, **caractérisé en ce que** l'axe de rotation (24) incliné par rapport à l'axe de rotation (22) de la partie tournante (18) est défini par un roulement à galets coniques (84) entre les deux parties tournantes (16, 18), roulement dont les guides intérieur et extérieur sont réalisés directement sur les parties tournantes (16, 18).

14. Dispositif selon l'une des revendications précédentes, **caractérisé en ce que** la roue de véhicule est entraînée par l'intermédiaire d'un arbre articulé centré dont la cloche d'articulation (78) est assemblée de manière fixe, par l'intermédiaire d'un assemblage par enfichage (74) et d'une vis centrale (80), à un segment de moyeu (72) d'un boudin de roue (68) portant la roue, le segment de moyeu (72) portant notamment deux bagues intérieures (66a) du roulement de roue (66) et une douille de serrage (76).

15. Dispositif selon l'une des revendications précédentes, **caractérisé en ce que** les pièces logeant les roulements à galets coniques (52, 82, 84) et le roulement de roue (66) sont fabriquées en acier et la partie de guidage (14) et la partie porteuse (12) sont fabriquées en métal léger.
